# EUROPÄISCHE PATENTANMELDUNG

(11) **EP 3 664 260 A1**
(43) Veröffentlichungstag der Anmeldung: **10.06.2020**
(21) Anmeldenummer: 19193958.6
(22) Anmeldetag: 28.08.2019
(51) Int. Cl.: H02K 5/173, H02K 5/15

(54) **ELEKTROMOTOR MIT MONTAGEFLANSCH**

(30) Priorität: 07.12.2018 DE 102018009527
(71) Anmelder: WILO SE, 44263 Dortmund (DE)
(72) Erfinder: Materne, Thomas, 44263 Dortmund (DE); Soyubey, Ismet Sacit, 44263 Dortmund (DE); Seif, Vladimir, 44263 Dortmund (DE)
(74) Vertreter: Cohausz Hannig Borkowski Wißgott

(57) **Zusammenfassung**

Die Erfindung betrifft einen Elektromotor (1), der zum Antreiben und mechanisch festen Verbinden mit einer Kreiselpumpe vorgesehen ist, mit einem zylindrischen Motorgehäuse (3) aus Metall, das ein antriebsseitiges erstes Axialenden (4) mit einer zentralen Öffnung (6), durch welche eine drehbar gelagerte Motorwelle (8) hindurchragt, und ein dem ersten Axialende (4) gegenüberliegendes zweites Axialende (5) aufweist, durch welches ein Stator (7) axial in das Motorgehäuse (3) eingeschoben ist, wobei die Motorwelle (8) einen innerhalb des Stators (7) angeordneten, trockenlaufenden Rotor (9) trägt, und am ersten Axialende (4) ein vom Motorgehäuse (3) unabhängiger Montageflansch (2) aus Metall stirnseitig an das Motorgehäuse (3) angesetzt, insbesondere angeschraubt ist, der zur mittelbaren oder unmittelbaren Schraubbefestigung der Kreiselpumpe am Elektromotor (1) dient und gegenüber dem Motorgehäuse (3) radial zumindest abschnittsweise außen hervorsteht. Das Motorgehäuse (3) geht am ersten Axialende (4) einstückig in einen ringförmigen, radial nach innen gerichteten Gehäuseflansch (10) über, an dem der Montageflansch (2) anliegt. Der Gehäuseflansch (10) umfasst eine Lageraufnahme (12, 28), in der ein Wälzlager (14) zur Lagerung der Motorwelle (8) aufgenommen ist, das mit seinem Außenumfang unmittelbar in der Lageraufnahme (12, 28) einliegt.

## Beschreibung

Die Erfindung betrifft einen Elektromotor, der zum Antreiben und mechanisch festen Verbinden mit einer Kreiselpumpe vorgesehen ist, mit einem zylindrischen Motorgehäuse aus Metall, das ein antriebsseitiges erstes Axialenden mit einer zentralen Öffnung, durch welche eine drehbar gelagerte Motorwelle hindurchragt, und ein dem ersten Axialende gegenüberliegendes zweites Axialende aufweist, durch welches ein Stator axial in das Motorgehäuse eingeschoben ist, wobei die Motorwelle einen innerhalb des Stators angeordneten, trockenlaufenden Rotor trägt, und am ersten Axialende ein vom Motorgehäuse unabhängiger Montageflansch aus Metall stirnseitig an das Motorgehäuse angesetzt, insbesondere angeschraubt ist, der zur mittelbaren oder unmittelbaren Schraubbefestigung der Kreiselpumpe am Elektromotor dient und gegenüber dem Motorgehäuse radial zumindest abschnittsweise außen hervorsteht.

Insbesondere betrifft die Erfindung einen sogenannten Normmotor mit Montageflansch gemäß der Präzisionsklasse des IEC-Standards 72-1.

Gattungsgemäße Elektromotoren sind allgemein bekannt, beispielsweise aus den deutschen Patentanmeldungen DE 102017000845 A1, DE 102010050348 A1 oder DE 102014220201 A1. Auch zeigt Fig. 1 einen solchen Elektromotor 1. Der Montageflansch 2 ist hier funktional ein Teil des Motorgehäuses 3, da er das erste axiale Ende 4 des Motorgehäuses 3 und somit den Stator 7 stirnseitig abdeckt. Der Montageflansch 2 trägt ein Wälzlager 14 zur Lagerung der Motorwelle 8, so dass die radiale Position des Montageflanschs relativ zum Motorgehäuse auch die Lage der Motorwelle beeinflusst.

Um die Kompatibilität der Befestigungsanschlüsse von Lastmaschinen wie z.B. Kreiselpumpen, Getrieben, Kupplungen oder Laternen zu elektrischen Antriebsmotoren unterschiedlicher Hersteller sicherzustellen, sind die Befestigungsanschlüsse, auch Lochbild oder Verschraubungsbild genannt, genormt, beispielsweise für Elektromotoren in dem IEC-Standard 72-1 oder DIN 42673. Der IEC-Standard 72-1 unterscheidet hinsichtlich der erlaubten Toleranzen zwischen einer Standardklasse und einer Präzisionsklasse, welche geringere Toleranzen u.a. bezüglich Rundlaufeigenschaften, Exzentrizität und Rechtwinkligkeit des Montageflansches zur Welle gegenüber der Standardklasse erlaubt.

Um der Präzisionsklasse anzugehören, muss sichergestellt werden, dass der Montageflansch exakt konzentrisch an das Motorgehäuse angesetzt ist und zudem rechtwinklig zur Welle liegt. Aufgrund des Eigengewichts des Motorgehäuses, des Stators und des Rotors, welches an dem Montageflansch hängt, kann sich dieser in der Vertikalebene geringfügig verbiegen, was sich auch auf das von ihm getragene Wälzlager und folglich auf die Ausrichtung der Motorwelle auswirkt und die Rundlaufeigenschaften verschlechtert. Um dies zu vermeiden, muss der Montageflansch entsprechend massiv und/ oder mit Verstärkungsstrukturen wie z.B. Rippen versehen werden, wodurch sich das Gesamtgewicht des Elektromotors und die Herstellungskosten erhöhen.

Im Allgemeinen wird ein fertig montierter, einsatzbereiter Normmotor nach seiner Herstellung vermessen und klassifiziert. Dabei erreicht nur eine vergleichsweise geringe Menge aller hergestellten Normmotoren unmittelbar die Präzisionsklasse gemäß des IEC-Standards 72-1. Um zu erreichen, dass weitere Normmotoren den vorgesehenen Toleranzen der Präzisionsklasse genügen, wird der Montageflansch im montierten Zustand des Motors in der Regel aufwändig maschinell nachbearbeitet, insbesondere nachgedreht, so dass Exzentrizitäts- und Rechtwinkligkeitsfehler reduziert werden. In der Praxis kann dies jedoch nur bei denjenigen hergestellten Normmotoren erfolgen, die ohnehin bereits gute Toleranzwerte aufweisen, weil der Nacharbeitungsaufwand anderenfalls zu groß wäre.

Ein weiterer Nachteil gattungsgemäßer Elektromotoren besteht in der großen Variantenvielfalt. Da der Montageflansch zwingender Teil des Elektromotors ist (er trägt ein Radiallager und deckt den Stator ab) und der Elektromotor somit nur mitsamt dem Montageflansch vermessen und klassifiziert werden kann, muss jede mögliche Kombination aus Motorleistungsklasse und Flanschgröße eines Herstellers auf Lager gehalten werden. Bei drei Leistungsklassen und drei Flanschgrößen, wären dies neun Motorvarianten.

Es ist daher Aufgabe der vorliegenden Erfindung, einen Elektromotor bereitzustellen, der hohen Toleranzanforderungen genügt und als Normmotor zur Erreichung der Präzisionsklasse gemäß dem IEC-Standard 72-1 einfacher und kostengünstiger herzustellen ist, und der zudem eine Modularisierung ermöglicht, so dass weniger Motorvarianten auf Lager gehalten werden müssen.

Diese Aufgabe wird durch einen Elektromotor mit den Merkmalen des Anspruchs 1 gelöst. Vorteilhafte Weiterbildungen sind in den Unteransprüchen angegeben oder werden nachfolgend erläutert.

Erfindungsgemäß ist vorgesehen, einen Elektromotor gemäß der eingangs genannten Gattung derart weiterzubilden, dass das Motorgehäuse am ersten Axialende einstückig in einen ringförmigen, radial nach innen gerichteten Gehäuseflansch übergeht, an dem der Montageflansch anliegt, wobei der Gehäuseflansch eine Lageraufnahme umfasst, in der ein Wälzlager zur Lagerung der Motorwelle einliegt, das mit seinem Außenumfang unmittelbar in der Lageraufnahme einliegt.

Ein Kerngedanke der Erfindung liegt somit darin, einen Elektromotor mit Montageflansch bereitzustellen, bei dem das Wälzlager nicht am Montageflansch, sondern am Motorgehäuse gehalten ist, so dass sich die Positionierung und Befestigung des Montageflanschs am Motorgehäuse nicht auf die Lage der Motorwelle auswirkt, d.h. die Lage der Motorwelle von der toleranzbehafteten Herstellung und Positionierung des Montageflansches unabhängig ist. Hierdurch wird die Toleranzkette reduziert, eine höhere Genauigkeit der Maße erreicht und der Aufwand sowie die Kosten für die Herstellung von Normmotoren, die der Präzisionsklasse des IEC-Standards 72-1 genügen, reduziert.

Darüber hinaus ist ein erfindungsgemäßer Elektromotor auch ohne Montageflansch elektromechanisch funktionsfähig, da der Montageflansch kein Teil des Gehäuses für den Stator mehr bildet. Hierdurch wird die Variantenvielfalt reduziert, da nunmehr nur noch die verschiedenen Motortypen bzgl. ihrer Leistungsklasse einerseits und die verschiedenen Flanschgrößen andererseits auf Lager gehalten werden müssen und, je nach Kundenwunsch, eine Kombination eines bestimmten Motortyps mit einer bestimmten Flanschgröße erst später hergestellt werden kann. Bei beispielsweise drei Leistungsklassen und drei Flanschgrößen, wären also nur drei Motorvarianten auf Lager zu halten. Dies spart Lagerraum und -kosten.

Gemäß einer Ausführungsvariante kann die Lageraufnahme durch die radiale Innenseite eines zylindrischen, sich zum zweiten Axialende erstreckenden Lagertragrings gebildet sein, in den der Gehäuseflansch radial weiter innen (bezogen auf das Motorgehäuse) beabstandet zur Motorwelle unter Freilassung der zentralen Öffnung einstückig übergeht. Dabei kann das Wälzlager unmittelbar an der Innenseite, insbesondere am Innenumfang des Lagertragrings anliegen. Es wird somit von dem Lagertragring gehalten, wobei die Radialkräfte von diesem auf den Gehäuseflansch übertragen werden. Der Gehäuseflansch kann in dieser Variante bevorzugt ringscheibenförmig sein. Das bedeutet, dass seine axiale Dicke wesentlich geringer ist, als seine radiale Breite, so dass Gewicht eingespart wird.

Gemäß einer anderen Ausführungsvariante kann die Lageraufnahme durch die radiale Innenseite des Gehäuseflanschs gebildet sein. Dies bedeutet, dass die axiale Dicke des Gehäuseflanschs im Wesentlichen der axialen Breite des Wälzlagers entspricht und somit ausreicht, um das Wälzlager direkt in der vom Gehäuseflansch frei gelassenen Öffnung zu halten. Der Gehäuseflansch ist in dieser Ausführungsvariante also vergleichsweise massiv und stabil. Geeigneterweise kann die axiale Dicke des Gehäuseflanschs sogar gleich oder größer als seine radiale Breite ist.

Vorzugsweise ist der Montageflansch durch eine ringscheibenförmige Platte gebildet. Da das Wälzlager gegenüber dem Stand der Technik nicht mehr am Montageflansch gehalten ist, braucht dieser keine Aufnahme oder Strukturierung zu haben, um ein solches Wälzlager zu halten. Somit können die axialen Abmessungen des erfindungsgemäßen Montageflansches geringer als bei Montageflanschen nach dem Stand der Technik sein. Da ferner das Gewicht des Elektromotors nicht mehr am Montageflansch, sondern am Gehäuseflansch hängt, werden keine Verstärkungsstrukturen am Montageflansch benötigt. Die axiale Dicke des Montageflanschs kann somit insgesamt dünner sein, als nach dem Stand der Technik.

Von Vorteil ist es, wenn im Montageflansch eine ringförmige Vertiefung ausgebildet ist, in der der Gehäuseflansch formschlüssig einliegt. Dies ermöglicht die genaue radiale Positionierung des Montageflansches konzentrisch zur Motorachse. Da der Gehäuseflansch mit seiner ringförmigen Stirnfläche flächig am Boden der Vertiefung anliegt, wird zudem eine hohe Stabilität erreicht.

In einer Ausführungsvariante weist die Lageraufnahme an ihrem rotorseitigen Axialende zumindest einen radial nach innen gerichteten Vorsprung auf. Dieser bildet einen Anschlag und damit einen definierten Sitz für das Wälzlager beim Fügen, welches dann antriebsseitig, bzw. zum Stator hin, in die Lageraufnahme eingeschoben, insbesondere eingepresst wird, bis es am Vorsprung anliegt, so dass das Wälzlager axial genau positioniert werden kann.

Vorzugsweise geht der Lagertragring oder der Gehäuseflansch einstückig in den Vorsprung über. Bei der Variante, bei welcher die radiale Innenseite des Gehäuseflanschs die Lageraufnahme bildet, kann ein axialer Fortsatz diese Lageraufnahme verlängern, wobei dann an diesem, bzw. dessen axialen Ende der Vorsprung angeformt sein kann.

Von Vorteil ist es ferner, wenn der Vorsprung ringförmig ist. Dies vereinfacht die Herstellung, da der Vorsprung durch Drehen hergestellt werden kann.

Geeigneterweise deckt der Montageflansch das Wälzlager axial ab. Dies verhindert den Eintritt von Fremdkörpern wie Schmutz und Staub in das Lager, wobei kein gesondertes Lagerschild benötigt wird.

Von besonderem Vorteil ist es, wenn das Wälzlager bezogen auf seine axiale Positionierung ausschließlich innerhalb der Lageraufnahme gehalten ist. Dies bedeutet, dass das Wälzlager von der axialen Stirnseite des Gehäuseflanschs zurückversetzt ist, so dass der Montageflansch den Innenumfang des Gehäuseflanschs umgreifen kann. Dieses Umgreifen kann durch zumindest einen, insbesondere einen ringförmigen Vorsprung am Montageflansch erfolgen, welcher eine Anlage und axiale Fixierung für das Wälzlager in Richtung des Montageflanschs bildet.

Beispielsweise kann die axiale Tiefe der ringförmigen Vertiefung größer oder gleich der axialen Dicke des Gehäuseflanschs sein. Somit liegt der Gehäuseflansch vollständig in der Vertiefung ein.

Der Innendurchmesser der zentralen Öffnung kann bevorzugt größer als der Außendurchmesser des Rotors sein. Dies ermöglicht, den Rotor samt der Motorwelle von der Antriebsseite in das Motorgehäuse axial einzusetzen. In der Ausführungsvariante mit dem ringförmigen Vorsprung an der Lageraufnahme ist sinnvollerweise der Innendurchmesser der von diesem Vorsprung frei gelassenen Öffnung größer als der Außendurchmesser des Rotors, da dieser den Vorsprung passieren muss. Der Außendurchmesser des Wälzlagers kann vorzugsweise größer als der Außendurchmesser des Rotors sein, damit es an der Innenseite der Lageraufnahme fest anliegen kann. Dies hat den Vorteil, dass kein Zwischenring benötigt wird, um den Durchmesserunterschied zwischen dem Rotor und der zentralen Öffnung auszugleichen. Das Wälzlager erhält somit einen festen Sitz. Ferner kann es hinsichtlich der benötigten Standfestigkeit gegebenenfalls überdimensioniert sein.

Vorzugsweise bilden der radiale Außenumfang des ersten Axialendes und/ oder die Stirnseite des Gehäuseflansches jeweils eine maschinell bearbeitete Fläche. Vorzugsweise erfolgt die Bearbeitung dieser Flächen in einem gemeinsamen ersten Bearbeitungsschritt, wobei diese Flächen dann jeweils eine Referenzfläche für weitere Bearbeitungsschritte bilden. Dies hat den Vorteil, dass die Präzision des Bauteils erhöht wird. Ein weiterer Vorteil besteht darin, dass gleichzeitig der Montageflansch exakt positioniert wird, da die Referenzflächen die Zentrierungs- und Fixierungsflächen des Motorgehäuses für den Montageflansch bilden.

Von besonderem Vorteil ist es, wenn der Montageflansch mittels Befestigungsschrauben, die in koaxialen Gewindebohrungen im Gehäuseflansch eingeschraubt sind, fest mit dem Gehäuseflansch verbunden ist, wobei die Anordnung der Gewindebohrungen einer Norm für flanschlose Elektromotoren entspricht, beispielsweise der Norm IEC 72-2 (Jahr 1990) oder DIN 42677. Somit entspricht das Verschraubungsbild des Gehäuseflansches dem mechanischen Kundenanschluss (der Kundenschnittstelle), der bei Norm-Elektromotoren ohne Flansch zur Befestigung einer Lastmaschine am Motorgehäuse vorhanden ist. Dies hat den Vorteil, dass ein erfindungsgemäßer Norm-Elektromotor mitsamt Montageflansch, z.B. gemäß IEC 72-1, bei Weglassen dieses Montageflanschs gleichzeitig einen Norm-Elektromotor ohne Flansch bildet, beispielsweise gemäß IEC 72-2. Durch die Verwendung eines erfindungsgemäßen Montageflanschs kann der flanschlose Norm-Elektromotor in einen erfindungsgemäßen Norm-Elektromotor mit Montageflansch umgewandelt werden. Somit kann die Anzahl auf Lager zu haltender Normmotoren weiter reduziert werden.

Geeignet ist es, wenn das Motorgehäuse spritzgegossen, insbesondere aus Aluminium-Druckguss hergestellt ist. Der Montageflansch kann beispielsweise aus Grauguss hergestellt sein.

Weitere Merkmale, Vorteile und Eigenschaften des erfindungsgemäßen Elektromotors werden nachfolgend anhand eines Ausführungsbeispiels und der beigefügten Figuren näher erläutert. Es zeigen:
Fig. 1: einen Elektromotor nach dem Stand der Technik
Fig. 2: erste Ausführungsvariante eines erfindungsgemäßen Elektromotors mit neuem Montageflansch
Fig. 3: Montageflansch der ersten Ausführungsvariante
Fig. 4: Teil des Motorgehäuses der ersten Ausführungsvariante
Fig. 5: zweite Ausführungsvariante eines erfindungsgemäßen Elektromotors mit neuem Montageflansch
Fig. 6: Montageflansch der zweiten Ausführungsvariante
Fig. 7: Teil des Motorgehäuses der zweiten Ausführungsvariante

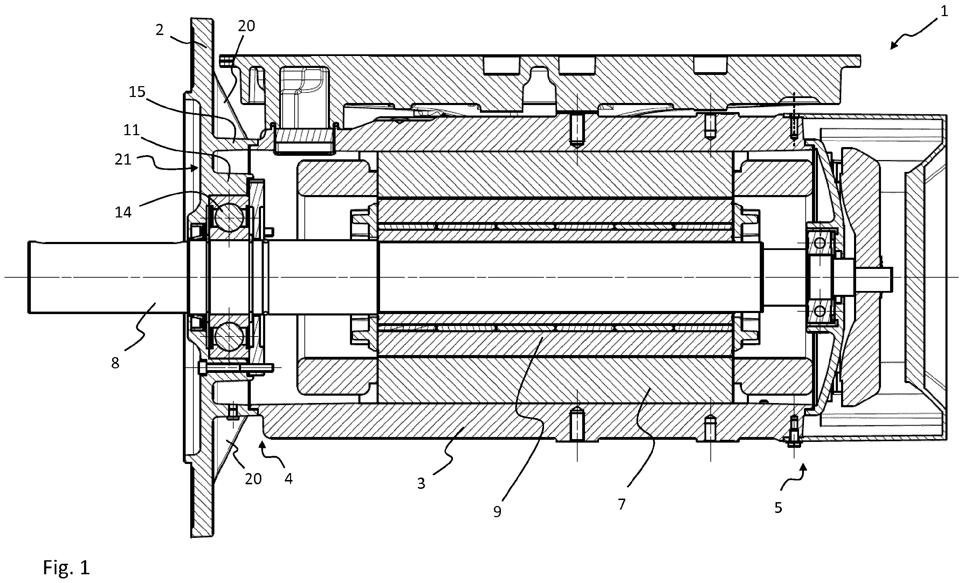

Fig. 1 zeigt einen gattungsgemäßen Elektromotor 1 nach dem Stand der Technik, der zum Antreiben und mechanisch festen Verbinden mit einer nicht dargestellten Kreiselpumpe vorgesehen und bestimmt ist. Der Elektromotor 1 weist ein zylindrisches Motorgehäuse 3 aus Metall, hier aus Aluminium-Druckguss, das ein antriebsseitiges erstes Axialende 4 und ein diesem gegenüberliegendes zweites Axialende 5 aufweist. Beide Axialenden 4, 5 sind offen ausgebildet, wobei sich durch das erste Axialende 4 eine drehbar gelagerte Motorwelle 8 zur Kreiselpumpe hindurch erstreckt. Mit dem Ende dieser Motorwelle kann z.B. die Pumpenwelle der Kreiselpumpe, eine Getriebewelle eines Getriebes oder eine Kupplungswelle zwischen dem Elektromotor und der Kreiselpumpe drehfest verbunden sein. Ein Stator 7 mit elektrischen Wicklungen ist von der Seite des zweiten Axialendes axial in das Motorgehäuse 3 mit Presssitz eingeschoben. Die Motorwelle 8 trägt einen innerhalb des Stators 7 angeordneten, trockenlaufenden Rotor 9.

Am ersten Axialende 4 ist ein Montageflansch 2 stirnseitig an das Motorgehäuse 3 angesetzt. Der Montageflansch 2 ist aus Metall, insbesondere aus Grauguss hergestellt. Er bildet ein vom Motorgehäuse 3 mechanisch unabhängiges Bauteil, gehört jedoch funktional zum Motorgehäuse 3, da er den Innenraum des Motorgehäuses 3, in dem der Stator 7 angeordnet ist, am ersten Axialende 4 verschließt. Der Montageflansch 2 umfasst ein scheibenförmiges Zentralteil 21 mit einem zentralen Loch 19, durch das die Motorwelle 8 hindurchtritt. Von der zum Motorgehäuse 3 gerichteten Rückseite des Zentralteils 21 erhebt sich ein konzentrischer Lagertragring 11, in dem ein Wälzlager 14 vollständig einliegt.

Gegenüber dem Lagertragring 11 radial weiter außen ist ein konzentrischer Montagering 15 an das Zentralteil 21 angeformt, welcher sich axial zum Motorgehäuse 3 hin erstreckt und mit seiner Stirnseite formschlüssig an der Stirnseite des Motorgehäuses 3 anliegt. Der Formschluss ist hier in Gestalt einer Stufe gebildet. Zwischen Montagering 15 und Zentralteil 21 sind mehrere, über den Umfang verteilte Verstärkungsrippen 20 vorhanden, die mit dem Montagering 15 und dem Zentralteil 21 einstückig sind. Die Verstärkungsrippen 20 erhöhen die Steifigkeit und reduzieren die Verbiegung des Montageflanschs 2, wenn das Gewicht des Motorgehäuses 3, Stators 7 und des Rotors 9 am Montageflansch 2 hängt. Der Montageflansch 2 steht radial zumindest abschnittsweise außen gegenüber dem Motorgehäuse 3 hervor, so dass das Lochbild des Montageflansches 2 außerhalb des Außendurchmessers des Motorgehäuses 3 liegt.

Der Montageflansch 2 dient zur mittelbaren oder unmittelbaren Schraubbefestigung der Kreiselpumpe am Elektromotor 1. So kann ein entsprechender Gegenflansch eines Pumpengehäuses der Kreiselpumpe direkt mit dem Montageflansch des Elektromotors 1 verschraubt werden. Alternativ kann ein entsprechender Gegenflansch Teil eines Getriebes, einer Kupplung oder einer Laterne sein, das bzw. die bestimmungsgemäß zwischen den Elektromotor 1 und der Kreiselpumpe zu montieren ist.

Wie bereits eingangs erwähnt, wirkt sich eine ungenaue Positionierung des Wälzlagers 14 im Montageflansch 2 und des Montageflanschs 2 bezogen auf das Motorgehäuse 3 nachteilig auf die Lage der Welle 8 aus, weil die Achse der Motorwelle 8 dann nicht exakt auf der Motorachse liegt. Exzentrizitätsfehler zwischen Montageflansch 2 und Motorgehäuse 3 sowie zwischen Wälzlager 14 und Montageflansch 2 kommen ebenso vor, wie Rechtwinkligkeitsfehler zwischen Montageflansch 2 und Motorwelle 8, wenn das Wälzlager 14 nicht genau koaxial in dem Lagertragring 11 einliegt. Bestimmte Toleranzen beeinflussen somit andere Toleranzen und erhöhen diese, so dass am Ende der Toleranzkette bei den Befestigungsabmessungen relativ hohe Abweichungen von den gewünschten Zielmaßen vorliegen können. Damit der Elektromotor 1 gemäß Fig. 1 einem Normmotor der Präzisionsklasse nach dem Standard IEC 72-1 genügt, ist es gegebenenfalls erforderlich, den Montageflansch 2 nach seiner Montage am Elektromotormotor 1 nachzubearbeiten, so dass die in der Norm geforderten Toleranzen eingehalten werden.

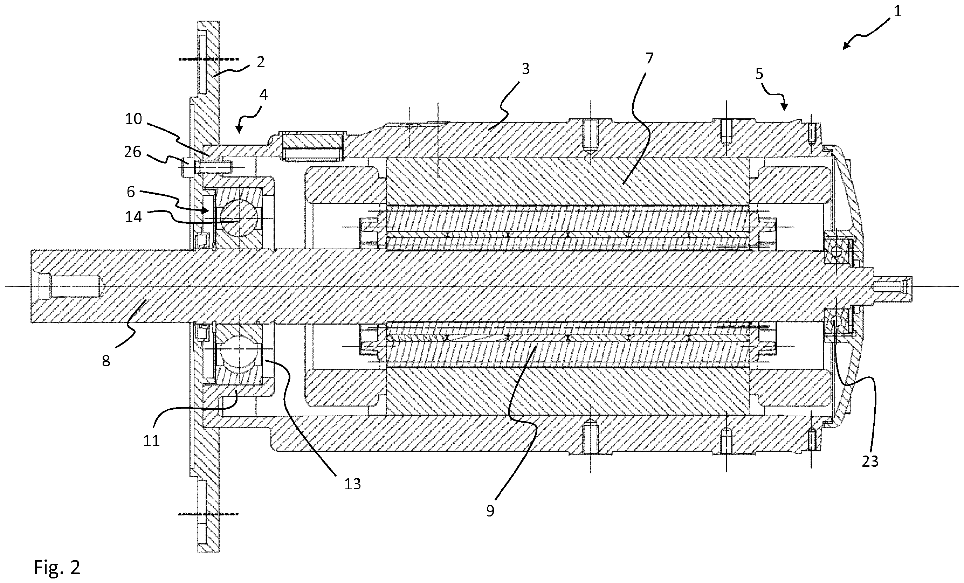

Fig. 2 zeigt einen erfindungsgemäßen Elektromotor 1 gemäß einer ersten Ausführungsvariante mit einem neuen Design des Montageflansches 2 und dem ersten Axialende 4 des Motorgehäuses 3, bei dem die Toleranzkette insgesamt kürzer ist, so dass von der Gesamtheit aller hergestellten Elektromotoren ein größerer Anteil unmittelbar die Präzisionsklasse des Standards IEC 72-1 erreicht, oder jedenfalls ein großer Teil der Elektromotoren mit erheblich geringerem Nachbearbeitungsaufwand diese Präzisionsklasse erreichen kann.

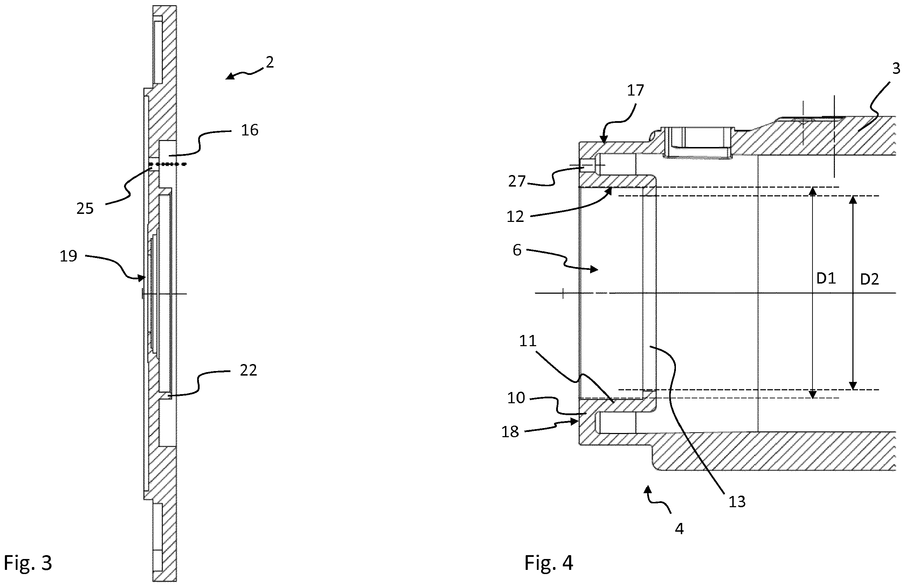

Fig. 3 zeigt den Montageflansch 2 gemäß Fig. 2 als einzelnes Bauteil, und Fig. 4 zeigt einen Abschnitt des Motorgehäuses 3 gemäß Fig. 2 als einzelnes Bauteil.

Erfindungsgemäß geht das Motorgehäuse 3 am ersten Axialende 4 einstückig in einen ringförmigen, radial nach innen gerichteten Gehäuseflansch 10 über. Das Motorgehäuse 3 ist am ersten Axialende 4 daher nicht über seine gesamte Stirnseite offen ausgebildet, wie das zweite Axialende 5. Vielmehr ist der Durchmesser der zentralen Öffnung 6 an der Stirnseite des ersten Axialendes um die radiale Breite des Gehäuseflansches 10 verringert. Der Gehäuseflansch 10 ist somit Teil des Motorgehäuses 3 und bildet eine ringförmige Stirnfläche, die axial an dem Montageflansch 2 anliegt. Der Gehäuseflansch 10 umfasst eine Lageraufnahme 12 (siehe Fig. 4), in der ein Wälzlager 14 zur Lagerung der Motorwelle 8 aufgenommen ist, das mit seinem Außenumfang unmittelbar in der Lageraufnahme 12 einliegt. Das Wälzlager 14 ist somit nicht mehr am Montageflansch 2, sondern über den Gehäuseflansch 10 am Motorgehäuse 3 gehalten. Somit kann der Montageflansch 4 axial insgesamt dünner ausgebildet werden, d.h. in axialer Richtung geringere bauliche Abmessungen haben.

Wie bei der Variante in Fig. 1 dient der Montageflansch zur Montage an einem entsprechenden Gegenflansch einer Kreiselpumpe, eines Getriebes, einer Kupplung oder einer Laterne. Der Montageflansch 2 besteht hier aber nur aus einer ringscheibenförmigen Platte, welche keine Lageraufnahme und auch keine Verstärkungsstrukturen besitzt. Die maximale axiale Baulänge des Montageflanschs 2 ist nur durch die erforderliche Steifigkeitsanforderung des Flansches 2 definiert. Somit ist er axial erheblich kürzer als bei der Variante in Fig. 1. Damit lässt sich insgesamt die axiale Baulänge des Elektromotors 1 verkürzen.

In der ersten Ausführungsvariante ist die Lageraufnahme 12 durch die radiale Innenseite, insbesondere den Innenumfang eines zylindrischen, sich zum zweiten Axialende 5 erstreckenden Lagertragrings 11 gebildet, in den der Gehäuseflansch 10 radial weiter innen beabstandet zur Motorwelle 8 unter Freilassung der zentralen Öffnung 6 einstückig übergeht. Mit seinem Außenumfang liegt das Wälzlager 14 also unmittelbar, d.h. ohne Zwischenring, an der Innenseite 12, insbesondere dem Innenumfang des Lagertragrings an. Im Teilquerschnitt ist die Gestaltung aus Motorgehäuse 3, Gehäuseflansch 10 und Lagertragring somit U-förmig. Der Gehäuseflansch 10 besitzt eine axiale Dicke, die geringer ist als die radiale Breite, so dass die Form des Gehäuseflanschs 10 im Wesentlichen ringscheibenförmig ist. Zwischen dem Lagertragring 11 und dem Motorgehäuse 3 liegt ein freier Ringraum, dessen Boden durch die zum Stator 7 gerichtete Rückseite des Gehäuseflansches 10 gebildet ist.

Der Montageflansch 2 ist erfindungsgemäß nicht nur baulich, sondern auch funktional ein vom Motorgehäuse 3 unabhängiges Bauteil. Er wird von der Antriebsseite an das Motorgehäuse 3 angesetzt und mit dem Motorgehäuse 3 verschraubt. Dies erfolgt mittels Befestigungsschrauben 26, die durch entsprechende Befestigungsbohrungen 25 im Montageflansch 2 hindurchgeführt und in Gewindebohrungen 27 des Gehäuseflanschs 10 eingeschraubt sind. Diese Gewindebohrungen 27 erstrecken sich koaxial durch den Gehäuseflansch 10. Um eine höhere Stabilität zu erreichen, kann eine Verlängerung der Gewindebohrungen 27 vorgesehen werden, indem am Ort der Gewindebohrungen 27 Materialmehrmengen vorgesehen werden. Der Gehäuseflansch 10 weist dann lokal begrenzte Verdickungen, d.h. eine partiell größere axiale Dicke auf, wobei die Gewindebohrungen 27 durch diese Verdickungen geführt sind.

Im montierten Zustand deckt der Montageflansch 2 das Wälzlager 14 axial ab. Auf der zum Stator 7 gerichteten Rückseite besitzt der Montageflansch 2 eine ringförmige Vertiefung 16, in der der Gehäuseflansch 10 formschlüssig einliegt. Dabei kontaktiert die axiale Stirnseite des Gehäuseflansches 10 den Boden der Vertiefung 16, welcher entsprechend eine Anlagefläche für das Motorgehäuse 3 und einen axialen Anschlag beim axialen Fügen des Montageflansches 2 relativ zum Motorgehäuse 3 bildet. Die axiale Tiefe der ringförmigen Vertiefung 16 ist im Wesentlichen gleich der axialen Dicke des Gehäuseflanschs 10. In radialer Richtung nach außen ist die Vertiefung 16 durch eine ringförmige Wand begrenzt, an deren Innenumfang der Gehäuseflansch 10 mit seinem Außenumfang anliegt. In radialer Richtung zur Welle 8 hin ist die Vertiefung 16 durch den Außenumfang eines ringförmigen, sich in axialer Richtung erstreckenden Vorsprungs 22 des Montageflanschs 2 begrenzt. An diesem Vorsprung 22 liegt der Gehäuseflansch 10 mit seinem Innenumfang an. Der Vorsprung 22 bildet mit seiner Stirnseite einen axialen Anschlag und eine Anlagefläche für das Wälzlager 14 Richtung Antriebsseite. Die die Vertiefung 16 radial nach außen begrenzende ringförmige Wand und der Außenumfang des ringförmigen Vorsprungs 22 liegen koaxial zur Mittelachse des Montageflansches 2.

Der Lagertragring 11 weist an seinem rotorseitigen Axialende zumindest einen ringförmigen, radial nach innen gerichteten Vorsprung 13 auf, in den der Lagertragring 11 einstückig übergeht. Dieser Vorsprung 13 bildet ebenfalls einen axialen Anschlag für das Wälzlager 14, wenn dieses in Richtung des Stators 7 gefügt wird. Im montierten Zustand des Montageflanschs 2 ist das Wälzlager 14 zwischen dem Vorsprung 22 des Montageflanschs 2 und dem Vorsprung 13 des Lagertragrings 11 fest eingespannt. Bezogen auf seine axiale Positionierung wird das Wälzlager 14 ausschließlich innerhalb des Lagertragrings 11 gehalten und nicht vom radialen Innenumfang des Gehäuseflanschs 10.

Die Montage des Elektromotors 1 erfolgt hier derart, dass das Wälzlager 14 zunächst im Presssitz auf die Motorwelle 8 montiert wird, auf welche anschließend oder zuvor auch der Rotor 8 mit Presssitz montiert wird. Die so vorgefertigte Rotor-Baugruppe wird von der Antriebsseite, d.h. durch die zentrale Öffnung 6 hindurch in das Motorgehäuse 3 geschoben. Demgegenüber wird der Stator 7 vom zweiten Axialende 5 in das Motorgehäuse 3 eingeschoben. Um den Fügeschritt der Rotor-Baugruppe zu erreichen, ist der Innendurchmesser D1 des Lagertragrings 11 größer als der Außendurchmesser des Rotors 9, so dass der Rotor 9 den Lagertragring 11 passieren kann. Dies bedeutet, dass das Wälzlager 14 einen zumindest geringfügig größeren Durchmesser als der Rotor 9 besitzt, um einen Presssitz innerhalb des Lagertragrings 11 zu gewährleisten, womit das Wälzlager 14 deutlich überdimensioniert ist. Es ist mithin erheblich größer als das am anderen Ende der Welle 18 befindliche zweite Wälzlager 23. Ferner ist auch der Durchmesser D2 des Innenumfangs des radialen Vorsprungs 13 des Lagertragrings 11 größer als der Außendurchmesser des Rotors 9, damit dieser den Vorsprung 13 passieren kann.

Der radiale Außenumfang 17 des Gehäuses 3 am ersten Axialende 4 und die axiale Stirnseite 18 des Gehäuseflansches 10 bilden jeweils eine maschinell bearbeitete Fläche. Diese Flächen 17, 18 sind einerseits Anlageflächen für den Montageflansch 2, um ihn zu zentrieren und zu fixieren, und werden in einem gemeinsamen ersten Bearbeitungsschritt mit hoher Präzision hergestellt. Sie dienen andererseits in einem nachfolgenden zweiten Bearbeitungsschritt als Aufspannungspunkte in einem Bearbeitungswerkzeug zur Bearbeitung weiterer axialer Flächen und Umfangsflächen des Motorgehäuses 3 und des Montageflansches 2. Im Hinblick auf diesen zweiten Bearbeitungsschritt dienen die Flächen somit als Referenzflächen 17, 18. Sämtliche anderen Flächen werden zu diesen Referenzflächen 17, 18 ausgerichtet. Dies gewährleistet Konzentrizität und eine genaue axiale und rechtwinklige Positionierung der Bauteile.

Insbesondere werden der Innenumfang 12 des Lagertragrings 11 (Lageraufnahme), der Innenumfang des Motorgehäuses 3 (Statorsitz), der die Anlagefläche für den Stator 7 bildet, und/ oder der Innenumfang der Begrenzungswand der Vertiefung 16 und der Außenumfang des Vorsprungs 22 des Montageflansches 2 an der radialen Referenzfläche 17 (Flanschzentrierung) und der axialen Referenzfläche 18 (Flanschfixierung) orientiert.

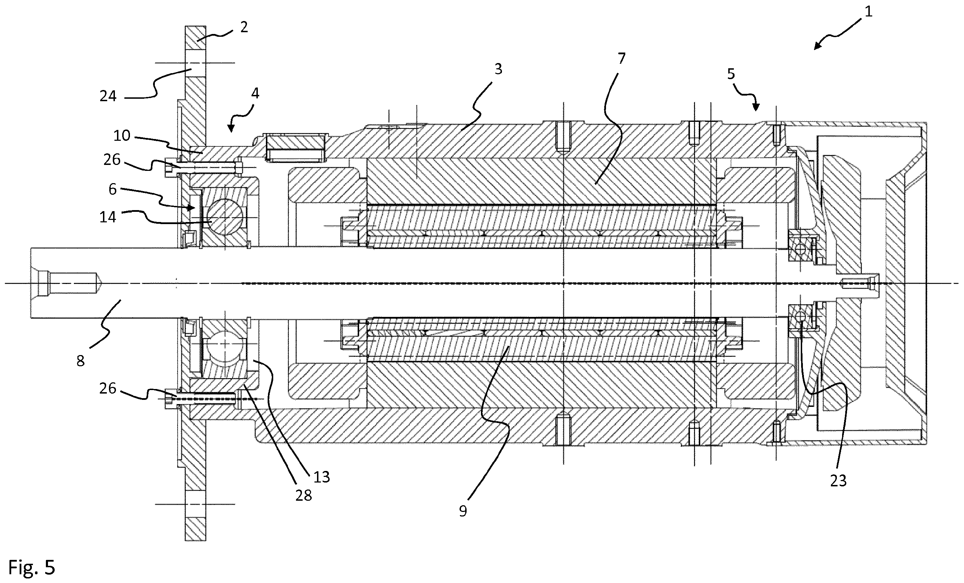

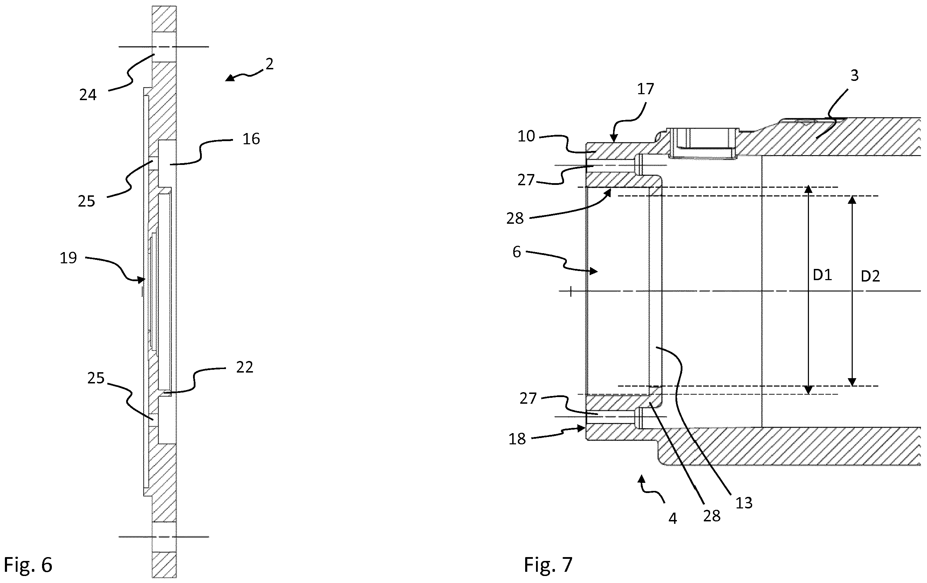

Fig. 5 zeigt einen erfindungsgemäßen Elektromotor 1 gemäß einer zweiten Ausführungsvariante, Fig. 6 den Montageflansch 2 gemäß Fig. 5 als einzelnes Bauteil und Fig. 7 einen Abschnitt des Motorgehäuses 3 gemäß Fig. 5 als einzelnes Bauteil, analog zu den Figuren 2 bis 4. Nachfolgend werden nur die wesentlichen Unterscheide der zweiten Ausführungsvariante gegenüber der ersten Ausführungsvariante angesprochen, wobei die Eigenschaften, Merkmale und Vorteile der beiden Varianten im Übrigen identisch sind.

Der wesentliche Unterschied der zweiten Ausführungsvariante gegenüber der ersten Ausführungsvariante besteht in der axialen Dicke des Gehäuseflansches 10, welche hier erheblich größer ist, als in der ersten Ausführungsvariante. So ist die axiale Dicke des Gehäuseflansches 10 größer als seine radiale Breite, so dass der Gehäuseflansch 10 keine Ringscheibe bildet, sondern massiv ist. Die Lageraufnahme ist hier durch die radiale Innenseite 28 des Gehäuseflanschs 10 gebildet, so dass der Gehäuseflansch 10 selbst den Lagersitz für das Wälzlager 14 bildet. Ein separater Lagertragring wie bei der ersten Ausführungsvariante ist somit nicht vorhanden oder kann als Materialabschnitt des Gehäuseflanschs 10 betrachtet werden. Der Gehäuseflansch 10 besitzt jedoch einen sich in axialer Richtung zum Stator 7 erstreckenden Fortsatz 29, welcher die radiale Innenseite 28 des Gehäuseflanschs 10 bündig verlängert und das Wälzlager 14 in einem Abschnitt mit trägt. Am statorseitigen Axialende dieses Fortsatzes 29 ist ein radial nach innen gerichteter, ringförmiger Vorsprung 13 angeformt, der einen axialen Anschlag für das Wälzlager 14 bildet.

Der Montageflansch 2 ist mittels Befestigungsschrauben 26, die in koaxialen Gewindebohrungen 27 im Gehäuseflansch 10 eingeschraubt sind, fest mit dem Gehäuseflansch 10 verbunden. Die Anordnung der Gewindebohrungen 27, d.h. das Loch- oder Verschraubungsbild, entspricht der Norm IEC 72-2 (Jahr 1990) für flanschlose Elektromotoren. Ein erfindungsgemäßer Norm-Elektromotor 1 mitsamt Montageflansch 2 gemäß IEC 72-1 Standard kann somit bei Weglassen des Montageflanschs 2 gleichzeitig als Norm-Elektromotor ohne Flansch nach dem IEC 72-2 Standard verwendet werden. Hierdurch wird die Variantenvielfalt reduziert und die Modularität bei der Herstellung normgerechter Elektromotoren erhöht. Durch die Verwendung eines erfindungsgemäßen Montageflanschs 2 kann der flanschlose Norm-Elektromotor in einen erfindungsgemäßen Norm-Elektromotor 1 mit Montageflansch 2 umgewandelt werden. Somit kann die Anzahl auf Lager zu haltender Normmotoren reduziert werden. Dies gilt auch für die erste Ausführungsvariante.

Des Weiteren sind in der Schnittdarstellung der Fig. 5 und 7 radial außen liegende Befestigungsbohrungen 24 im Montageflansch 2 dargestellt, die zur Befestigung eines Gegenflanschs einer Lastmaschine am Montageflansch 2 dienen. Der erfindungsgemäßen Elektromotor 1 ist in beiden Ausführungsvarianten bevorzugt zur Montage mit und zum Antrieb von Kreiselpumpen in Trockenläuferbauweise vorgesehen, kann jedoch auch als Antrieb oder Generator bei anderen Maschinen verwendet werden.

### Bezugszeichenliste

- 1: Elektromotor
- 2: Montageflansch
- 3: Motorgehäuse
- 4: Erstes Axialende
- 5: Zweites Axialende
- 6: Zentrale Öffnung des ersten Axialendes
- 7: Stator
- 8: Motorwelle
- 9: Rotor
- 10: Gehäuseflansch
- 11: Lagertragring
- 12: Innenseite des Lagertragrings
- 13: Vorsprung
- 14: Wälzlager
- 15: Montagering
- 16: Vertiefung
- 17: Außenumfang des ersten Axialendes
- 18: Stirnseite des Gehäuseflanschs
- 19: Loch
- 20: Verstärkungsrippen
- 21: Zentralteil
- 22: Vorsprung
- 23: Wälzlager
- 24: Befestigungsbohrungen für Pumpenflansch
- 25: Befestigungsbohrungen für Montageflansch
- 26: Befestigungsschraube
- 27: Gewindebohrung in Gehäuseflansch
- 28: Innenseite des Gehäuseflanschs
- 29: Fortsatz

## Patentansprüche

1. Elektromotor (1), der zum Antreiben und mechanisch festen Verbinden mit einer Kreiselpumpe vorgesehen ist, mit einem zylindrischen Motorgehäuse (3) aus Metall, das ein antriebsseitiges erstes Axialenden (4) mit einer zentralen Öffnung (6), durch welche eine drehbar gelagerte Motorwelle (8) hindurchragt, und ein dem ersten Axialende (4) gegenüberliegendes zweites Axialende (5) aufweist, durch welches ein Stator (7) axial in das Motorgehäuse (3) eingeschoben ist, wobei die Motorwelle (8) einen innerhalb des Stators (7) angeordneten, trockenlaufenden Rotor (9) trägt, und am ersten Axialende (4) ein vom Motorgehäuse (3) unabhängiger Montageflansch (2) aus Metall stirnseitig an das Motorgehäuse (3) angesetzt, insbesondere angeschraubt ist, der zur mittelbaren oder unmittelbaren Schraubbefestigung der Kreiselpumpe am Elektromotor (1) dient und gegenüber dem Motorgehäuse (3) radial zumindest abschnittsweise außen hervorsteht, **dadurch gekennzeichnet, dass** das Motorgehäuse (3) am ersten Axialende (4) einstückig in einen ringförmigen, radial nach innen gerichteten Gehäuseflansch (10) übergeht, an dem der Montageflansch (2) anliegt, wobei der Gehäuseflansch (10) eine Lageraufnahme (12, 28) umfasst, in der ein Wälzlager (14) zur Lagerung der Motorwelle (8) aufgenommen ist, das mit seinem Außenumfang unmittelbar in der Lageraufnahme (12, 28) einliegt.

2. Elektromotor (1) nach Anspruch 1, **dadurch gekennzeichnet, dass** die Lageraufnahme (12, 28) durch die radiale Innenseite (12) eines zylindrischen, sich zum zweiten Axialende (5) erstreckenden Lagertragrings (11) gebildet ist, in den der Gehäuseflansch (10) radial weiter innen beabstandet zur Motorwelle (8) unter Freilassung der zentralen Öffnung (6) einstückig übergeht.

3. Elektromotor (1) nach Anspruch 1 oder 2, **dadurch gekennzeichnet, dass** der Gehäuseflansch (10) ringscheibenförmig ist.

4. Elektromotor (1) nach Anspruch 1 oder 2, **dadurch gekennzeichnet, dass** die Lageraufnahme (12, 28) durch die radiale Innenseite (28) des Gehäuseflanschs (10) gebildet ist.

5. Elektromotor (1) nach Anspruch 4, **dadurch gekennzeichnet, dass** die axiale Dicke des Gehäuseflanschs (10) gleich oder größer als seine radiale Breite ist.

6. Elektromotor (1) nach einem der vorherigen Ansprüche, **dadurch gekennzeichnet, dass** der Montageflansch (2) durch eine ringscheibenförmige Platte gebildet ist.

7. Elektromotor (1) nach einem der vorherigen Ansprüche, **dadurch gekennzeichnet, dass** im Montageflansch (2) eine ringförmige Vertiefung (16) ausgebildet ist, in der der Gehäuseflansch (10) formschlüssig einliegt.

8. Elektromotor (1) nach einem der vorherigen Ansprüche, **dadurch gekennzeichnet, dass** die Lageraufnahme (12, 28) an ihrem rotorseitigen Axialende zumindest einen radial nach innen gerichteten Vorsprung (13) aufweist, insbesondere in diesen einstückig übergeht.

9. Elektromotor (1) nach einem der vorherigen Ansprüche, **dadurch gekennzeichnet, dass** der Montageflansch (2) das Wälzlager (14) axial abdeckt.

10. Elektromotor (1) nach einem der vorherigen Ansprüche, **dadurch gekennzeichnet, dass** das Wälzlager (14) bezogen auf seine axiale Positionierung ausschließlich innerhalb der Lageraufnahme (12, 28) gehalten ist.

11. Elektromotor (1) nach einem der vorherigen Ansprüche, **dadurch gekennzeichnet, dass** die axiale Tiefe der ringförmigen Vertiefung (16) größer oder gleich der axialen Dicke des Gehäuseflanschs (10) ist.

12. Elektromotor (1) nach einem der vorherigen Ansprüche, **dadurch gekennzeichnet, dass** der Innendurchmesser (D1) der Lageraufnahme (12, 28) größer als der Außendurchmesser des Rotors (9) ist.

13. Elektromotor (1) zumindest nach Anspruch 8, **dadurch gekennzeichnet, dass** der Innendurchmesser (D2) der von dem Vorsprung (13) frei gelassenen Öffnung größer als der Außendurchmesser des Rotors ist.

14. Elektromotor (1) nach einem der vorherigen Ansprüche, **dadurch gekennzeichnet, dass** der radiale Außenumfang (17) des ersten Axialendes (4) und/ oder die Stirnseite (18) des Gehäuseflansches (10) eine maschinell bearbeitete Fläche bildet.

15. Elektromotor (1) nach einem der vorherigen Ansprüche, **dadurch gekennzeichnet, dass** der Montageflansch (2) mittels Befestigungsschrauben (26), die in koaxialen Gewindebohrungen (27) im Gehäuseflansch (10) eingeschraubt sind, fest mit dem Gehäuseflansch (10) verbunden ist, wobei die Anordnung der Gewindebohrungen (27) einer Norm für flanschlose Elektromotoren entspricht.
